# EUROPEAN PATENT SPECIFICATION

(11) **EP 2 143 997 B1**
(45) Date of publication and mention of the grant of the patent: **18.09.2019**
(21) Application number: 08740281.4
(22) Date of filing: 11.04.2008
(51) Int. Cl.: F23C 99/00, F22B 35/00, F22G 5/00, F23K 3/02, F23L 9/02, F23N 1/02, F23N 3/02, F23N 5/00, G01F 1/66, G01F 1/712, G01F 1/74, G01P 5/20

(54) **PULVERIZED COAL BURNING BOILER**
KESSEL ZUM VERBRENNEN VON FEINEM KOHLENSTAUB
CHAUDIÈRE À CHARBON PULVÉRISÉ

(30) Priority: 13.04.2007 JP 2007105973
(43) Date of publication of application: 13.01.2010
(73) Proprietor: Mitsubishi Hitachi Power Systems, Ltd., Yokohama-shi, Kanagawa 220-8401 (JP)
(72) Inventor: OHYATSU, Noriyuki, Kure-shi Hiroshima 737-0029 (JP); YOSHIZAKO, Hidehisa, Kure-shi Hiroshima 737-0029 (JP); SHIMOHIRA, Katsumi, Kure-shi Hiroshima 737-0029 (JP); OKIMURA, Hitoshi, Kure-shi Hiroshima 737-0029 (JP); MIYAKE, Seishi, Kure-shi Hiroshima 737-8508 (JP)
(74) Representative: V.O.
(86) International application number: PCT/JP2008/057184
(87) International publication number: WO 2008/133051

(56) References cited:
- EP-A1- 1 975 509
- EP-A2- 0 446 520
- DE-A1- 4 426 280
- JP-A- 04 222 315
- JP-A- 06 101 806
- JP-A- 06 317 304
- JP-A- 08 270 931
- JP-A- 09 021 505
- JP-A- 61 027 408
- JP-A- 63 156 904
- JP-A- 2007 107 849
- US-A- 6 037 783
- US-B1- 6 659 026

## Description

### Technical Field

The present invention relates to a pulverized coal burning boiler such as a power generation boiler apparatus and particularly to a pulverized coal burning boiler in which a plurality of coal feeding pipes are connected to a single milling means such as a roller mill so that pulverized coal generated by the milling means is distributed to the plurality of coal feeding pipes, fed to individual pulverized coal burners and burned.

### Background Art

### (Background Art 1)

Conventionally, a pulverized coal burning boiler uses a two-stage burning method in which air with a smaller ratio than a theoretical air ratio is imported by a burner and low NOx combustion is performed in a reducing atmosphere in order to reduce the amount of emergence of NOx and then additional air is imported from an after air port (hereinafter abbreviated as AAP) as a post-stage in order to burn unburned contents such as CO.

To achieve complete burning at a furnace outlet finally, the amount of air imported into a combustion device as a whole is imported so excessively as to be about 1.2 which is more than the theoretical air ratio of 1.0.

In recent years, there has been an increasing demand for combustion at a ratio as close to the theoretical air ratio of 1.0 as possible, i.e. at a low excess air ratio for the purpose of reducing the amount of combustion gas to thereby attain reduction in size of a furnace and an exhaust gas processing device, etc. following the furnace, reduction in various kinds of fan motive utilities, etc.

With respect to the background art 1, for example, Patent Documents JP-A-8-270931, US6037783A and US6656026B1 can be listed.

### Disclosure of the Invention

### Problems that the Invention is to Solve

### (Problem 1)

As described in JP-A-8-270931 , combustion at a low excess air ratio has a demerit that the supply amount of combustion air decreases greatly and production of an unburned component such as CO increases in comparison with the related art. US6037783A and US6656026B1 disclose similar pulverised coal burning boilers wherein the air ratio is controlled.

A pulverized coal burning method for reducing the amount of produced NOx has been disclosed in JP-A-8-270931. Specifically, combustion of pulverized coal by an in-flame denitration type pulverized coal burner which forms a reducing flame region short of oxygen takes a point of view that the concentration of NOx in exhaust gas is largely affected by the temperature of the reducing flame region or the air ratio of the reducing flame region.

Configuration is made so that a light extractor is attached to the pulverized coal burner, light of flame in the reducing flame region formed by the burner is detected by the light extractor, the detection signal is led to an emission spectrometer, the intensity of emitted light is detected, the temperature of the reducing flame region or the air ratio of the reducing flame region is calculated, and the amount of pulverized coal or the amount of air supplied to the burner is controlled based on a result of the calculation.

This pulverized coal burning method is effective in reducing NOx but brings a state short of oxygen as a whole. As a result, there is a problem that production of an unburned component such as CO increases.

A first object of the invention is to provide a pulverized coal burning boiler in which production of an unburned component such as CO is reduced in a pulverized coal burning boiler having a reduced excess air ratio.

### Means for Solving the Problems

The invention is a pulverised coal burning boiler according to claim 1. A first means to achieve the first object is a pulverized coal burning boiler including:
milling means such as vertical roller mills which generate pulverized coal by milling supplied coal;
coal feeding pipes which are arranged in such a manner that a plurality of coal feeding pipes are connected to one milling means and through which the pulverized coal is airflow-conveyed by primary air;
pulverized coal burners which are connected to front end sides of the coal feeding pipes respectively and which have pulverized coal nozzles disposed so as to face into a furnace;
combustion air supply means which supply combustion air other than the primary air to the pulverized coal burners individually;
combustion air supply amount measuring means which measure the supply amounts of the combustion air supplied by the combustion air supply means individually;
combustion air supply amount adjusting means which adjust the supply amounts of the combustion air; and
burner air ratio setting means which set burner air ratios;
wherein pulverized coal milled and generated by the milling means is distributed to the coal feeding pipes, jetted from the pulverized coal nozzles into the furnace and burned under supply of the combustion air;
the pulverized coal burning boiler characterized in that there are provided:
   pulverized coal supply amount measuring means which individually measure the supply amounts of pulverized coal conveyed through the coal feeding pipes respectively; and
   air supply amount control means which calculate the supply amounts of combustion air corresponding to the supply amounts of pulverized coal based on the supply amounts of pulverized coal measured by the pulverized coal supply amount measuring means and the supply amounts of combustion air supplied to the pulverized coal burners connected to the coal feeding pipes and measured by the combustion air supply amount measuring means and send control command signals to the combustion air supply amount adjusting means so that burner air ratios set by the burner air ratio setting means can be kept.

According to a second means, the pulverized coal burning boiler defined in the first means is characterized in that the pulverized coal supply amount measuring means are attached to the coal feeding pipes of pulverized coal burners or pulverized coal burner groups high in unburned component reducing effect in the pulverized coal burners so that the supply amounts of combustion air are adjusted individually.

According to a third means, the pulverized coal burning boiler defined in the first means is characterized in that the pulverized coal burners are disposed as several stages for the furnace and the pulverized coal supply amount measuring means are attached to the coal feeding pipes of the pulverized coal burners except the pulverized coal burners disposed on the lower stage so that the supply amounts of combustion air are adjusted individually.

According to a fourth means, the pulverized coal burning boiler defined in the first means is characterized in that the pulverized coal burners are disposed as several stages for the furnace and the pulverized coal supply amount measuring means are attached to the coal feeding pipes of the pulverized coal burners disposed on at least the uppermost stage so that the supply amounts of combustion air are adjusted individually.

According to a fifth means, the pulverized coal burning boiler defined in the first means is characterized in that a plurality of the pulverized coal burners are disposed side by side to form a burner stage, a plurality of after air ports are disposed side by side on a downstream side of the burner stage in an exhaust gas flow direction,
the amount of combustion air supplied to at least one of the pulverized coal burners is adjusted, and
the amount of combustion air supplied to an after air port near to flame formed by the pulverized coal burner is adjusted.

According to a sixth means, the pulverized coal burning boiler defined in the fifth means is characterized in that the plurality of pulverized coal burners and the plurality of after air ports are disposed so as to be separated into a vessel front and a vessel back of a furnace,
when the amount of combustion air supplied to the pulverized coal burners disposed in the vessel front is adjusted, the amount of combustion air supplied to the after air ports disposed in the vessel back is adjusted, and
when the amount of combustion air supplied to the pulverized coal burners disposed in the vessel back is adjusted, the amount of combustion air supplied to the after air ports disposed in the vessel front is adjusted.

### Effect of the Invention

The invention is configured as described above. Because the flow rates of pulverized coal conveyed through the coal feeding pipes are measured individually so that the supply amounts of combustion air corresponding to the supply amounts of pulverized coal can be calculated and supplied so that burner air ratios set in advance can be kept, production of an unburned component such as CO can be reduced effectively even in the pulverized coal burning boiler in which the excess air ratio is reduced, for example, to 1.1.

### (4) First Embodiment

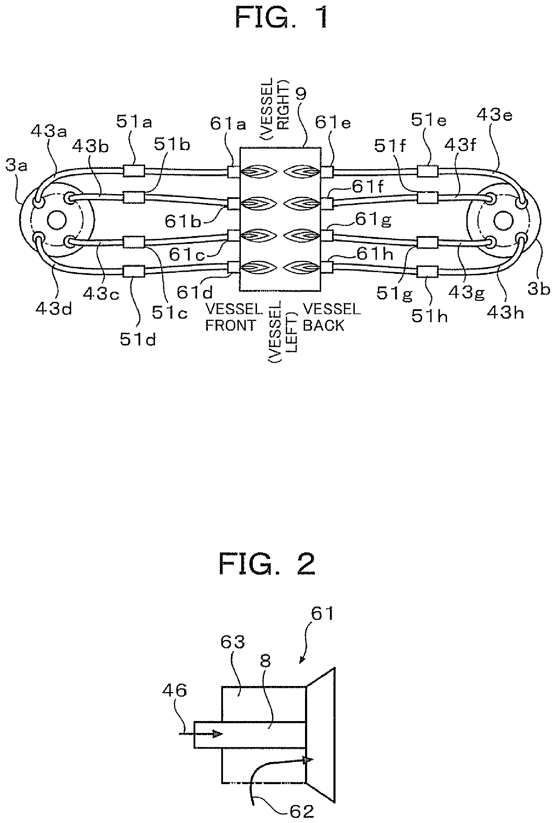

Fig. 1 is a schematic plan configuration view of a pulverized coal burning boiler according to a first embodiment.

In this embodiment, for example, four pulverized coal burners 61a to 61d are disposed in vessel front of the pulverized coal burning boiler 9 while four pulverized coal burners 61e to 61h are disposed in vessel back thereof so as to be opposite to the four pulverized coal burners 61a and 61d respectively. Two mills 3 are disposed in vessel front and in vessel back, respectively. Four coal feeding pipes 43a to 43d extended from the vessel front mill 3a are connected to the pulverized coal burners 61a to 61d respectively while four coal feeding pipes 43e to 43h extended from the vessel back mill 3b are connected to the pulverized coal burners 61e to 61h respectively.

Pulverized coal flowmeters 51a to 51h are attached to the coal feeding pipes 43a to 43h respectively so that the flow rates of pulverized coal passing through the coal feeding pipes 43 can be measured individually.

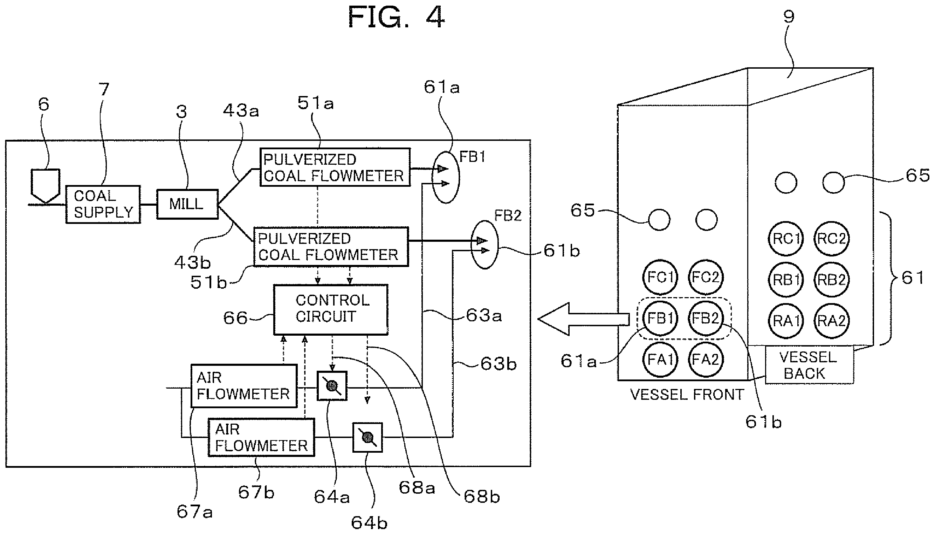

Fig. 2 is a schematic configuration view of a pulverized coal burner 61. As shown in Fig. 2, a pulverized coal nozzle 8 is disposed in the central portion of the pulverized coal burner 61. A combustion air supply path 63 for supplying combustion air (secondary air and tertiary air) 62 other than primary air is provided in an outer circumferential portion of the pulverized coal nozzle 8 individually in accordance with each burner 61. Combustion air supply amount adjusting means 64 (see Fig. 4), for example, of a dumper type or a slide type for adjusting the amount of supplied combustion air 62 is provided in an intermediate portion of the combustion air supply path 63. As shown in Fig. 2, while the mixed fluid 46 of pulverized coal and primary air is jetted from the pulverized coal nozzle 8 into the furnace, combustion air 62 of a low excess air ratio is supplied from the combustion air supply path 63 to thereby ignite and burn pulverized coal.

Although this embodiment has been described in the case where the combustion air 62 is supplied to the outer circumference of the pulverized coal nozzle 8, the invention is not limited thereto as long as the combustion air 62 can be supplied so that pulverized coal jetted from the pulverized coal nozzle 8 into the furnace can be burned.

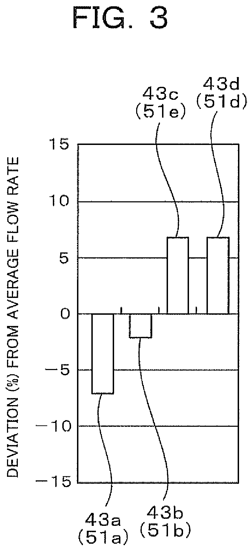

Fig. 3 is a graph showing an example of deviations from an average flow rate in the case where pulverized coal obtained by supplying raw coal at a rate of X(t/h) to one mill 3 and milling the raw coal in the mill 3 is distributed to coal feeding pipes 43a to 43d so that the flow rates of pulverized coal are measured by pulverized coal flowmeters 51a to 51d respectively.

In this graph, 0% deviation means detection of pulverized coal at the average flow rate (X/4 in this example). This example shows that pulverized coal at flow rates lower than the average flow rate is conveyed to the coal feeding pipes 43a and 43b while pulverized coal at flow rates higher than the average flow rate is conveyed to the coal feeding pipes 43c and 43d. For example, the deviation of the measured value is caused by a pressure loss difference based on the pipe length difference between the coal feeding pipes 43, the structure of the mill, etc. It is confirmed that the deviation varies according to the operating condition of the mill such as the rotational velocity of the rotary classifier.

In this embodiment, a deviation state of the flow rate of pulverized coal conveyed by each coal feeding pipe 43 is detected, the amount of supplied combustion air corresponding to the amount of supplied pulverized coal is calculated based on the deviation individually for each burner so that the air ratio set by the burner air ratio setting means can be kept, and a control signal is transmitted to each combustion air supply amount adjusting means 64 to thereby adjust the amount of combustion air supplied to each burner 61 individually.

Fig. 4 is a view for explaining a combustion air supply amount control system therefor. A right half of Fig. 4 is a view showing an example of arrangement of pulverized coal burners 61 and AAPs 65 on their downstream sides in the pulverized coal burning boiler 9. Each of vessel front and vessel back is separated into burner stages so that a large number of pulverized coal burners 61 are arranged side by side in accordance with each burner stage. AAPs 65 are provided separately in both vessel front and vessel back so that the AAPs 65 are arranged side by side correspondingly to the respective pulverized coal burners 61.

A left half of Fig. 4 is a view showing a combustion air supply amount control system for the pulverized coal burners 61. The amounts of pulverized coal distributed and supplied from the mill 3 to the respective burners 61a and 61b as described above are measured individually by the pulverized coal flowmeters 51a and 51b, so that measured values thereof are input to a control circuit 66.

On the other hand, combustion air supply amount adjusting means 64a and 64b and air flowmeters 67a and 67b are attached individually to intermediate portions of combustion air supply paths 63a and 63b provided correspondingly to the burners 61a and 61b respectively. Measured values of the amounts of air supplied to the burners 61a and 61b and measured individually by the air flowmeters 67a and 67b are also input to the control circuit 66. There is a mechanism that the control circuit 66 outputs combustion air supply amount control signals 68a and 68b to the combustion air supply amount adjusting means 64a and 64b individually.

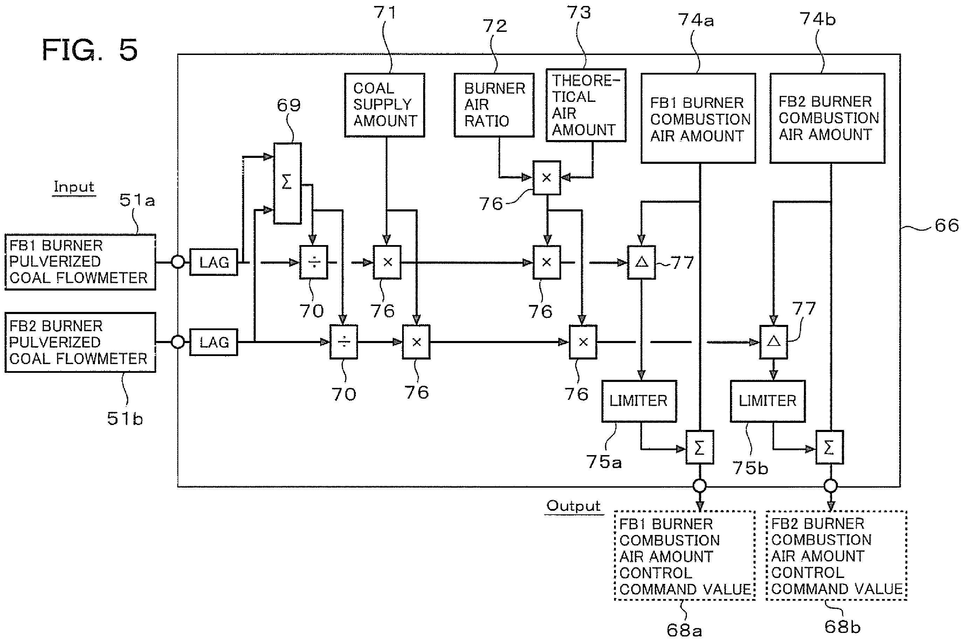

Fig. 5 is a block diagram showing an example of configuration of the control circuit 66. Values measured by the pulverized coal flowmeters 51a and 51b are input to the control circuit 66, so that deviation values from the average flow rate in the respective coal feeding pipes 43a and 43b are obtained by an adder 69 and dividers 70.

A supplied coal amount 71, a burner air ratio 72, a theoretical air amount 73, combustion air amounts 74a and 74b for the respective burners, etc. are input to the control circuit 66 in advance. In this embodiment, the burner air ratio 72 is set at 0.8 and the AAP air ratio is set at 0.3. Accordingly, the air ratio of the whole boiler is a low excess air ratio of 1.1.

Combustion air supply amounts corresponding to the pulverized coal supply amounts are calculated and output as combustion air amount command values 68a and 68b based on the various set values and the deviation values of the pulverized coal amounts in the respective coal feeding pipes 43a and 43b so that the aforementioned burner air ratio can be kept. Various multipliers 76, subtracters 77, etc. in the control circuit 66 are used as means for calculating the command values 68a and 68b. Limiting items of correction amount limiters 75a and 75b provided on the output end side of the control circuit 66 are upper and lower limits of absolute values, change widths, and change ratios.

When the combustion air supply amounts corresponding to the pulverized coal supply amounts in the respective coal feeding pipes are controlled individually as described above, a CO reducing effect is large in combustion at a low excess air ratio.

### (5) Second Embodiment

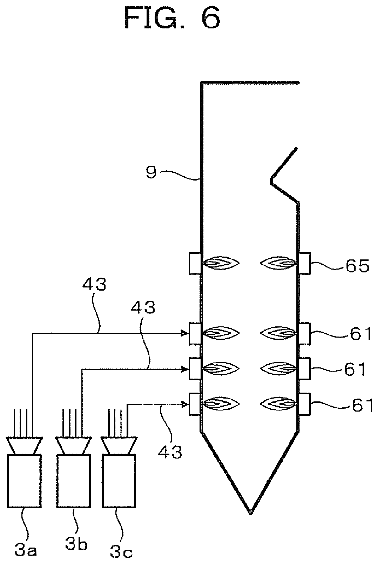

Fig. 6 is a schematic configuration view of a pulverized coal burning boiler according to a second embodiment.

As shown in Fig. 6, mills 3a to 3c are disposed. The mills 3a, 3b and 3c are connected to upper-stage, middle-stage and lower-stage burners 61 respectively so that pulverized coal is supplied thereto.

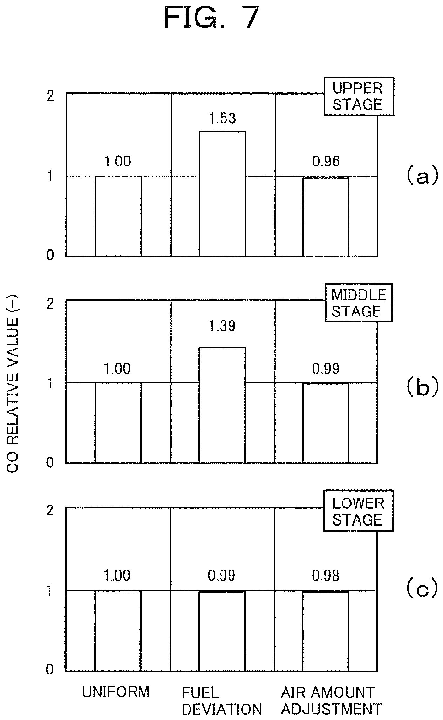

Fig. 7 is a view showing results of an experiment performed for specifying a burner stage large in CO reducing effect. This experiment was performed by use of a combustion analysis model having six burners in each burner stage.

The amount of CO produced when pulverized coal (fuel) was equally distributed to burners in each burner stage was measured and regarded as a reference value (1.00) (see left columns in Fig. 7). A relative value of the amount of CO produced when deviation was given to the fuel supply amount so that the sum of deviation values (see Fig. 3) from the average flow rate of the six burners became 20% was shown in each central column in Fig. 7. As shown in the central columns in Fig. 7, the amount of CO produced in the lower-stage burners little increased in spite of more or less deviation of the fuel supply amount whereas the amount of CO produced in the upper and middle stages increased by about 40% or more when there was deviation of the fuel supply amount. Especially, the increase in the amount of CO produced in the upper-stage burners was remarkable.

Then, the pulverized coal flowmeters 51 were attached to the coal feeding pipes 43 connected to the burners 61 respectively and the combustion air amount was adjusted as described in the first embodiment. Results thereof were shown in right columns in Fig. 7. As is obvious from the results in the right columns in Fig. 7, the CO reducing effect in the upper and middle stages is large, especially the effect in the upper-stage burners is remarkable.

Therefore, this embodiment is configured so that the pulverized coal flowmeters 51, the control circuit 66, etc. are not attached to the lower stage but the pulverized coal flowmeters 51, the control circuit 66, etc. are attached to the upper and middle stages having a CO reducing effect, especially, to at least the upper stage to adjust the combustion air amount.

Although this embodiment has been described in the case where whether the pulverized coal flowmeters 51 and the control circuit 66 are attached or not is determined in accordance with each burner stage, the magnitudes of the CO reducing effect in all burners may be grasped in advance by an experiment or the like so that the pulverized coal flowmeters 51 and the control circuit 66 can be selectively attached to burners having a CO reducing effect.

### (6) Third Embodiment

A third embodiment will be described below. In the electrostatic charge type pulverized coal flowmeter 51b the concentration p of pulverized coal passing through the coal feeding pipe 43 and the flow velocity V of the pulverized coal can be obtained as described above. Accordingly, the flow rate of primary air carrying pulverized coal can be calculated based on the concentration p and flow velocity V of the pulverized coal, the circulation sectional area S of the coal feeding pipe 43 and the temperature correction value. As the flow velocity V becomes higher, the flow rate of primary air, that is, the flow rate of primary air supplied to the burner 61 increases.

Therefore, this embodiment is configured so that the flow rate of primary air is calculated and the amount of supplied combustion air 62 is adjusted in consideration of the flow rate of primary air, for example, by means of reducing the amount of supplied combustion air 62 when the flow rate of primary air is high. Incidentally, calculation of the flow rate of primary air and adjustment of the amount of supplied combustion air 62 based on the calculation result are performed by the control circuit 66.

This embodiment is particularly effective for a coal type such as subbituminous coal low in theoretical air amount because the rate of the amount of primary air in the coal type is higher than that in another coal type such as bituminous coal. The theoretical air amount of bituminous coal is 7.0 m³N/kg whereas the theoretical air amount of subbituminous coal is 5.5 m³N/kg which is small.

### (7) Fourth Embodiment

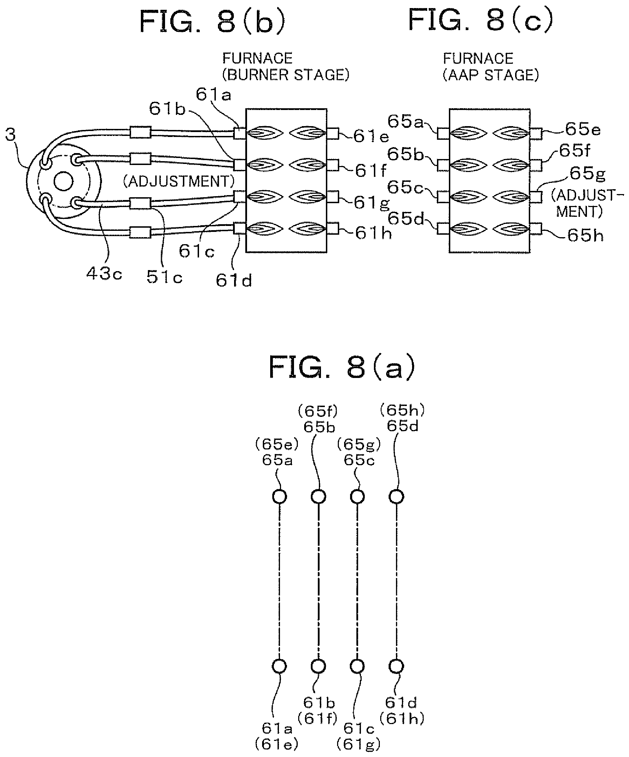

Fig. 8 is a schematic configuration view of a pulverized coal burning boiler according to a fourth embodiment. Fig. 8(a) is a view showing the correspondence relation between pulverized coal burners 61 and AAPs 65. Fig. 8(b) is a view showing the arrangement of pulverized coal burners 61. Fig. 8(c) is a view showing the arrangement of AAPs 65.

In this embodiment, as shown in Fig. 8(b), pulverized coal burners 61a to 61d in vessel front are disposed opposite to pulverized coal burners 61e to 61h in vessel back on a plane. As shown in Fig. 8(c), AAPs 65a to 65d in vessel front are disposed opposite to AAPs 65e to 65h in vessel back on a plane. As shown in Fig. 8(a), the AAPs 65 are disposed just above the pulverized coal burners 61 respectively.

A burner combustion air amount adjustable range in each of the pulverized coal burners 61a to 61h is limited in advance from view of burner design. In this embodiment, the adjustable range is limited to 10% of the rating burner combustion air amount.

For example, when the air amount needs to increase by 13% of the rating air amount as a result of calculation based on the output of the pulverized coal flowmeter 51c shown in Fig. 8(b), configuration is made so that the amount of burner combustion air supplied to the pulverized coal burner 61c increases by 10% and the amount of AAP air supplied to the AAP 65g on the opposite side increases by the remaining 3%.

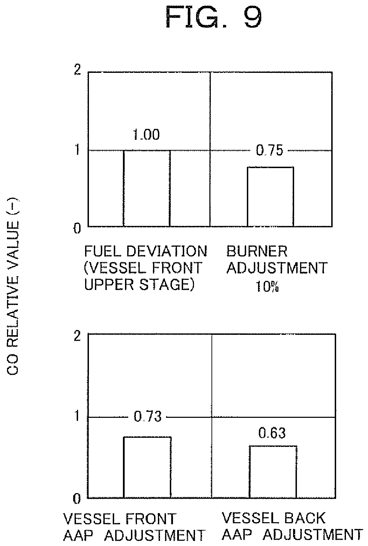

Fig. 9 is a view showing the CO reducing effect in this embodiment. In this experimental example, a fuel deviation of +20% is detected in the pulverized coal burner 61c in the vessel-front upper stage. On this occasion, the CO relative value is 1.53 (see the upper stage in Fig. 7). Accordingly, when the amount of burner combustion air supplied to the pulverized coal burner 61c increased by 10%, the relative value of CO decreased to 0.75 (see the right of the upper stage in Fig. 9) so that the amount of CO could be reduced by 25% from the reference value.

The amount of AAP air needs to cover the remaining 10%. The CO reducing effect in the case where the amount of air supplied to the vessel-front AAP 65c just above the pulverized coal burner 61c was increased by 10% and the CO reducing effect in the case where the amount of air supplied to the vessel-back AAP 65g on the side opposite to the pulverized coal burner 61c was increased by 10% were examined. When the amount of air supplied to the vessel-front AAP 65c was increased, there was little effect (see the left of the lower stage in Fig. 9). On the other hand, when the amount of air supplied to the vessel-back AAP 65g was increased, a further CO reducing effect was obtained, so that the amount of CO could be overall reduced by 37% from the reference value (see the right of the lower stage in Fig. 9).

### (8) Fifth Embodiment

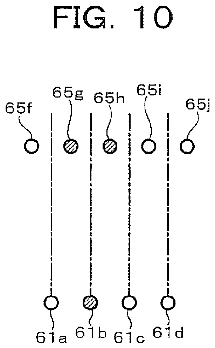

Fig. 10 is a view showing the correspondence relation between pulverized coal burners 61 and AAPs 65 in a pulverized coal burning boiler according to a fifth embodiment.

In this embodiment, the number of AAPs 65 is larger than the number of pulverized coal burners 61, so that each pulverized coal burner 61 is disposed just below a midpoint between two AAPs 65. For example, when the amount of air supplied to the vessel-front pulverized coal burner 61b is increased, the amount of air supplied to the vessel-back AAPs 65g and 65h substantially opposite to the pulverized coal burner 61b, that is, nearest to flame formed by the pulverized coal burner 61b is increased while divided into two equal parts for the vessel-back AAPs 65g and 65h. Configuration is made so that when the amount of air supplied to the vessel-front pulverized coal burner 61c is increased, air is increased while divided into two equal parts for the vessel-back AAPs 65h and 65i substantially opposite to the pulverized coal burner 61c.

### Brief Description of the Drawings

[Fig. 1] A schematic plan configuration view of a pulverized coal burning boiler according to a first embodiment of the invention.
[Fig. 2] A schematic configuration view of a pulverized coal burner used in the pulverized coal burning boiler according to the first embodiment.
[Fig. 3] A graph showing an example of deviations from an average flow rate in the case where pulverized coal is distributed to four coal feeding pipes and the flow rates of pulverized coal are measured by pulverized coal flowmeters respectively.
[Fig. 4] A view for explaining a combustion air supply amount control system according to the first embodiment of the invention.
[Fig. 5] A block diagram showing a control circuit used in the combustion air supply amount control system.
[Fig. 6] A schematic configuration view of a pulverized coal burning boiler according to a second embodiment of the invention.
[Fig. 7] A view showing results of an experiment performed for specifying a burner stage large in CO reducing effect.
[Fig. 8] A schematic configuration view of a pulverized coal burning boiler according to a third embodiment of the invention.
Fig. 8 (a) is a view showing the correspondence relation between pulverized coal burners and AAPs . Fig. 8 (b) is a view showing the arrangement of pulverized coal burners. Fig. 8(c) is a view showing the arrangement of AAPs.
[Fig. 9] A view showing the CO reducing effect in the third embodiment.
[Fig. 10] A view showing the correspondence relation between pulverized coal burners and AAPs in a pulverized coal burning boiler according to a fifth embodiment of the invention.

### Description of the Reference Numerals and Signs

1: forcing blower, 2: primary air forcing blower, 3: vertical roller mill, 4: exhaust gas type air preheater, 5: raw coal, 6: coal banker, 7: coal supply, 8: pulverized coal nozzle, 9: pulverized coal burning boiler, 10: steam type air preheater, 11: wind box, 12: dust collector, 13: denitrater, 14: induced blower, 15: desulfurizer, 21: milling portion, 22: classifying portion, 23: milling portion driving portion, 24: classifying portion driving portion, 25: distributing portion, 43: coal feeding pipe, 44: coal supply pipe, 45: primary air, 46: mixed fluid, 47: distributing chamber, 51: pulverized coal flowmeter, 51a: microwave type pulverized coal flowmeter, 51b: electrostatic charge type pulverized coal flowmeter, 52: microwave transmitter, 53: microwave receiver, 54a: first charge sensor, 54b: second charge sensor, 61: pulverized coal burner, 62: combustion air, 63: combustion air supply path, 64: combustion air supply amount adjusting means, 65: AAP, 66: control circuit, 67: air flowmeter, 68: combustion air amount control command value, 69: adder, 70: divider, 71: coal supply amount, 72: burner air ratio, 73: theoretical air amount, 74: combustion air amount, 75: correction amount limiter, 76: multiplier, 77: subtracter.

## Claims

1. A pulverized coal burning boiler comprising:
milling means (3) which generate pulverized coal by milling supplied coal;
coal feeding pipes (43) which are arranged in such a manner that a plurality of coal feeding pipes are connected to one milling means and through which the pulverized coal is airflow-conveyed by primary air;
pulverized coal burners (61) which are connected to front end sides of the coal feeding pipes respectively and which have pulverized coal nozzles (8) disposed so as to face into a furnace;
combustion air supply means (63) which supply combustion air other than the primary air to the pulverized coal burners (61) individually;
combustion air supply amount measuring means (67) which measure the supply amounts of the combustion air supplied by the combustion air supply means individually;
combustion air supply amount adjusting means (64) which adjust the supply amounts of the combustion air; and
burner air ratio setting means (72) which set burner air ratios;
wherein pulverized coal milled and generated by the milling means (3) is distributed to the coal feeding pipes (43), jetted from the pulverized coal nozzles (8) into the furnace and burned under supply of the combustion air;
the pulverized coal burning boiler further comprising:
pulverized coal supply amount measuring means (51) which individually measure the supply amounts of pulverized coal conveyed through the coal feeding pipes respectively; and
further comprising an air supply amount control means (66), **characterized in that** the air supply amount control means (66), based on the supply amounts of pulverized coal measured by the pulverized coal supply amount measuring means (51), detects a deviation of the flow rate of the pulverized coal conveyed by each coal feeding pipe (43) from an average flow rate of pulverized coal conveyed by all the coal feeding pipes (43); calculates the amount of supplied combustion air corresponding to the amount of pulverized coal based on the deviation individually for each pulverized coal burner (61) so that the air ratio set by the burner air ratio setting means (72) can be kept; and transmits a control signal to each combustion air supply amount adjusting means (64) to thereby adjust the amount of combustion air supplied to each pulverized coal burner (61) individually.

2. A pulverized coal burning boiler according to Claim 1, **characterized in that** the pulverized coal supply amount measuring means (51) are attached to the coal feeding pipes (43) of pulverized coal burners (61) or pulverized coal burner groups high in unburned component reducing effect in the pulverized coal burners so that the supply amounts of combustion air are adjusted individually.

3. A pulverized coal burning boiler according to Claim 1, **characterized in that** the pulverized coal burners (61) are disposed as several stages for the furnace and the pulverized coal supply amount measuring means (51) are attached to the coal feeding pipes (43) of the pulverized coal burners except the pulverized coal burners disposed on the lower stage so that the supply amounts of combustion air are adjusted individually.

4. A pulverized coal burning boiler according to Claim 1, **characterized in that** the pulverized coal burners (61) are disposed as several stages for the furnace and the pulverized coal supply amount measuring means (51) are attached to the coal feeding pipes (43) of the pulverized coal burners disposed on at least the uppermost stage so that the supply amounts of combustion air are adjusted individually.

5. A pulverized coal burning boiler according to Claim 1, **characterized in that** a plurality of the pulverized coal burners (61) are disposed side by side to form a burner stage, a plurality of after air ports (65) are disposed side by side on a downstream side of the burner stage in an exhaust gas flow direction,
the amount of combustion air supplied to at least one of the pulverized coal burners (61) is adjusted, and
the amount of combustion air supplied to an after air port (65) near to flame formed by the pulverized coal burner is adjusted.

6. A pulverized coal burning boiler according to Claim 5, **characterized in that** the plurality of pulverized coal burners(61) and the plurality of after air ports (65) are disposed so as to be separated into a vessel front and a vessel back of a furnace,
when the amount of combustion air supplied to the pulverized coal burners (61) disposed in the vessel front is adjusted, the amount of combustion air supplied to the after air ports disposed in the vessel back is adjusted, and
when the amount of combustion air supplied to the pulverized coal burners (61) disposed in the vessel back is adjusted, the amount of combustion air supplied to the after air ports (65) disposed in the vessel front is adjusted.

7. A pulverized coal burning boiler according to Claim 1, **characterized in that** a plurality of after air ports (65) are dispersively disposed on a downstream side of the pulverized coal burners (61) in an exhaust gas flow direction, concentration distribution detection means (80, 81) for detecting a distribution of oxygen concentrations or CO concentrations in exhaust gas is provided in a flue (82) on a downstream side of the after air ports (65) in an exhaust gas flow direction, and
while the amount of combustion air supplied to the pulverized coal burners (61) is adjusted, the amount of combustion air supplied to the after air ports (65) corresponding to a low oxygen concentration or high CO concentration region detected by the concentration distribution detection means (80, 81) is increased.

8. A pulverized coal burning boiler according to Claim 1, **characterized in that** each of the pulverized coal supply amount measuring means (51) has a microwave resonance pipe (43) through which a mixed fluid of the pulverized coal and primary air circulates, and a microwave transmitter (52) and a microwave receiver (53) which are disposed in the microwave resonance pipe so as to be at a predetermined distance from each other along a direction of a flow of the mixed fluid, and
the microwave transmitter (52) transmits microwaves to the microwave receiver (53) to measure a resonance frequency of the microwave resonance pipe to thereby measure the supply amount of the pulverized coal based on the resonance frequency.

9. A pulverized coal burning boiler according to Claim 8, **characterized in that** the microwave transmitter (52) and the microwave receiver (53) protrude into the microwave resonance pipe (43), and a knocking member is disposed on an upstream side of the microwave transmitter in the microwave resonance pipe to unravel a flow of the pulverized coal condensed like a string in the microwave resonance pipe.

10. A pulverized coal burning boiler according to Claim 1, **characterized in that** the pulverized coal supply amount measuring means (51) has a first charge sensor (54a) and a second charge sensor (54b) which are disposed in each of the coal feeding pipes (43) so as to be at a predetermined distance from each other along an axial direction of the coal feeding pipe, and
movement of electrostatic charges resulting from passage of pulverized coal in the coal feeding pipe is measured by the two charge sensors (54a, 54b) so that the supply amount of pulverized coal is measured based on the movement of electrostatic charges measured by the two charge sensors.

11. A pulverized coal burning boiler according to Claim 10, **characterized in that** the first charge sensor (54a) and the second charge sensor (54b) are circular and fluid guiding means (88) is provided on an upstream side of the charge sensors (54a, b) to collect pulverized coal and pour the collected pulverized coal into a central portion side (92) of the coal feeding pipe to thereby reduce the amount of pulverized coal passing through an inner circumferential side of the charge sensors.

12. A pulverized coal burning boiler according to claim 1, further comprising
a reheater which has a first reheater system (103) and a second reheater system (104) disposed side by side;
wherein steam from a high-pressure turbine is heated by the reheater and supplied to middle-pressure and low-pressure turbines, the pulverized coal burning boiler further comprising:
reheating steam distributing amount adjusting means (111, 112) which adjust the amounts of steam distributed to the first and second reheater systems;
reheater outlet steam temperature measuring means (113, 114) which measure reheater outlet steam temperatures of the first and second reheater systems; and
reheating steam distributing amount control means (120) which send control command signals to the reheating steam distributing amount adjusting means to eliminate the temperature difference based on a deviation between the reheater outlet steam temperatures measured by the reheater outlet steam temperature measuring means.

13. A pulverized coal burning boiler according to claim 1, further comprising
a superheater which has a first superheater system (204) and a second superheater system (205) disposed side by side;
wherein steam is superheated by the superheater and supplied to a high-pressure turbine;
the pulverized coal burning boiler further comprising:
superheating steam distributing amount adjusting means (215, 216) which adjust the amounts of steam distributed to the first and second superheater systems;
superheater outlet steam temperature measuring means (217, 218) which measure superheater outlet steam temperatures of the first and second superheater systems; and
superheating steam distributing amount control means (226) which send control command signals to the superheating steam distributing amount adjusting means to eliminate the temperature difference based on a deviation between the superheater outlet steam temperatures measured by the superheater outlet steam temperature measuring means.

## Patentansprüche

1. Mit Kohlenstaub befeuerter Dampferzeuger, umfassend:
Mahlmittel (3), die durch Mahlen zugeführter Kohle Kohlenstaub erzeugen;
Kohlezuführrohre (43), die in einer solchen Weise angeordnet sind, dass mehrere Kohlezuführrohre mit je einem Mahlmittel verbunden sind, und durch die der Kohlenstaub mit Primärluft als Tragluft gefördert wird;
Kohlenstaubbrenner (61), die jeweils mit vorderen Enden der Kohlezuführrohre verbunden sind und die Kohlenstaubdüsen (8) haben, die so angeordnet sind, dass sie in einen Brennraum weisen;
Verbrennungsluft-Zuführmittel (63), die Verbrennungsluft, die nicht die Primärluft ist, einzeln an die Kohlenstaubbrenner (61) liefern;
Verbrennungsluft-Zuführmengen-Messmittel (67), die die Zuführmengen der von den Verbrennungsluft-Zuführmitteln zugeführten Verbrennungsluft einzeln messen;
Verbrennungsluft-Zuführmengen-Einstellmittel (64), die die Zuführmengen der Verbrennungsluft einstellen; und
Brennerluftverhältnis-Einstellmittel (72), die Brennerluftverhältnisse einstellen;
wobei in den Mahlmitteln (3) gemahlener und erzeugter Kohlenstaub an die Kohlezuführrohre (43) verteilt wird, aus den Kohlenstaubdüsen (8) in den Brennraum eingedüst wird und unter der Zufuhr der Verbrennungsluft verbrannt wird;
der mit Kohlenstaub befeuerte Dampferzeuger ferner umfasst:
Kohlenstaub-Zuführmengen-Messmittel (51), die die Zuführmengen durch die Kohlezuführrohre geförderten Kohlenstaubs jeweils einzeln messen; und
ferner umfassend ein Luft-Zuführmengen-Steuerungsmittel (66),
**dadurch gekennzeichnet, dass** das Luft-Zuführmengen-Steuerungsmittel (66) auf Basis der Zuführmengen von den Kohlenstaub-Zuführmengen-Messmitteln (51) gemessenen Kohlenstaubs eine Abweichung der Strömungsrate des von jedem Kohlezuführrohr (54) geförderten Kohlenstaubs von einer durchschnittlichen Strömungsrate des von allen Kohlezuführrohren (43) geförderten Kohlenstaubs erfasst; die Menge zugeführter Verbrennungsluft, die der Menge an Kohlenstaub entspricht, auf Basis der Abweichung für jeden Kohlenstaubbrenner (61) einzeln berechnet, sodass das von den Brennerluftverhältnis-Einstellmitteln (72) eingestellte Luftverhältnis aufrechterhalten werden kann; und ein Steuersignal an jedes Verbrennungsluft-Zuführmengen-Einstellmittel (64) sendet, um dadurch die Menge an jeden Kohlenstaubbrenner (61) gelieferter Verbrennungsluft jeweils einzeln einzustellen.

2. Mit Kohlenstaub befeuerter Dampferzeuger gemäß Anspruch 1, **dadurch gekennzeichnet, dass** die Kohlenstaub-Zuführmengen-Messmittel (51) an den Kohlezuführrohren (43) von Kohlenstaubbrennern (61) oder Kohlenstaubbrennergruppen angebracht sind, deren Effekt der Verringerung des Anteils unverbrannter Kohle in den Kohlenstaubbrennern hoch ist, sodass die Zuführmengen von Verbrennungsluft einzeln eingestellt werden.

3. Mit Kohlenstaub befeuerter Dampferzeuger gemäß Anspruch 1, **dadurch gekennzeichnet, dass** die Kohlenstaubbrenner (61) als mehrere Stufen für die Brennräume angeordnet sind und die Kohlenstaub-Zuführmengen-Messmittel (51) an den Kohlezuführrohren (43) der Kohlenstaubbrenner außer den auf der unteren Stufe angeordneten Kohlenstaubbrennern angebracht sind, sodass die Zuführmengen von Verbrennungsluft einzeln eingestellt werden.

4. Mit Kohlenstaub befeuerter Dampferzeuger gemäß Anspruch 1, **dadurch gekennzeichnet, dass** die Kohlenstaubbrenner (61) als mehrere Stufen für den Brennraum angeordnet sind und die Kohlenstaub-Zuführmengen-Messmittel (51) an den Kohlezuführrohren (43) der Kohlenstaubbrenner angebracht sind, die zumindest an der obersten Stufe angeordnet sind, sodass die Zuführmengen von Verbrennungsluft einzeln eingestellt werden.

5. Mit Kohlenstaub befeuerter Dampferzeuger gemäß Anspruch 1, **dadurch gekennzeichnet, dass** mehrere Kohlenstaubbrenner (61) nebeneinander angeordnet sind, um eine Brennerstufe auszubilden, mehrere Nachluftöffnungen (65) nebeneinander in einer Rauchgasströmungsrichtung auf einer stromabwärts gelegenen Seite der Brennerstufe angeordnet sind,
die Menge an Verbrennungsluft, die an mindestens einen der Kohlenstaubbrenner (61) geliefert wird, eingestellt wird, und
die Menge an Verbrennungsluft, die an einen Nachluftanschluss (65) nahe der Flamme geliefert wird, die von dem Kohlenstaubbrenner (61) ausgebildet wird, eingestellt wird.

6. Mit Kohlenstaub befeuerter Dampferzeuger gemäß Anspruch 5, **dadurch gekennzeichnet, dass** die mehreren Kohlenstaubbrenner (61) und die mehreren Nachluftöffnungen (65) so angeordnet sind, dass sie auf eine Feuerraumvorder- und eine Feuerraumrückseite eines Brennraums aufgeteilt sind,
wenn die Menge an Verbrennungsluft, die an die an der Feuerraumvorderseite angeordneten Kohlenstaubbrenner (61) geliefert wird, eingestellt wird, die Menge an Verbrennungsluft, die an die an der Feuerraumrückseite angeordneten Nachluftöffnungen geliefert wird, eingestellt wird, und
wenn die Menge an Verbrennungsluft, die an die an der Feuerraumrückseite angeordneten Kohlenstaubbrenner (61) geliefert wird, eingestellt wird, die Menge an Verbrennungsluft, die an die an der Feuerraumvorderseite angeordneten Nachluftöffnungen (65) geliefert wird, eingestellt wird.

7. Mit Kohlenstaub befeuerter Dampferzeuger gemäß Anspruch 1, **dadurch gekennzeichnet, dass** mehrere Nachluftöffnungen (65) dispersiv auf einer in einer Rauchgasströmungsrichtung stromabwärts gelegenen Seite der Kohlenstaubbrenner (61) angeordnet sind, Konzentrations-Verteilungs-Erfassungsmittel (80, 81) zum Erfassen einer Verteilung von Sauerstoffkonzentrationen oder CO-Konzentrationen im Rauchgas in einem Kamin (82) auf einer in einer Rauchgasströmungsrichtung stromabwärts gelegenen Seite der Nachluftöffnungen (65) vorgesehen sind, und
während die Menge an Verbrennungsluft, die an die Kohlenstaubbrenner (61) geliefert wird, eingestellt wird, die Menge an Verbrennungsluft, die an die Nachluftöffnungen (65) geliefert wird, die einem Bereich mit niedriger Sauerstoffkonzentration oder hoher CO-Konzentration entsprechen, der von den Konzentrations-Verteilungs-Erfassungsmitteln (80, 81) erfasst wird, erhöht wird.

8. Mit Kohlenstaub befeuerter Dampferzeuger gemäß Anspruch 1, **dadurch gekennzeichnet, dass** jedes der Kohlenstaub-Zuführmengen-Messmittel (51) ein Mikrowellenresonanzrohr (43) hat, durch das ein gemischtes Fluid aus Kohlenstaub und Primärluft zirkuliert, und einen Mikrowellensender (52) und einen Mikrowellenempfänger (53), die in dem Mikrowellenresonanzrohr angeordnet sind, sodass sie in einer Strömungsrichtung des gemischten Fluids in einem vorbestimmten Abstand voneinander sind, und
der Mikrowellensender (52) Mikrowellen an den Mikrowellenempfänger (53) sendet, um eine Resonanzfrequenz des Mikrowellenresonanzrohrs zu messen, um dadurch auf Basis der Resonanzfrequenz die Zuführmenge des Kohlenstaubs zu messen.

9. Mit Kohlenstaub befeuerter Dampferzeuger gemäß Anspruch 8, **dadurch gekennzeichnet, dass** der Mikrowellensender (52) und der Mikrowellenempfänger (53) in das Mikrowellenresonanzrohr (43) hinein vorstehen, und ein Klopfelement auf einer stromaufwärts gelegenen Seite des Mikrowellensenders im Mikrowellenresonanzrohr angeordnet ist, um eine Strömung des Kohlenstaubs, die in dem Mikrowellenresonanzrohr wie ein Strang kondensiert ist, aufzutrennen.

10. Mit Kohlenstaub befeuerter Dampferzeuger gemäß Anspruch 1, **dadurch gekennzeichnet, dass** die Kohlenstaub-Zuführmengen-Messmittel (51) einen ersten Ladungssensor (54a) und einen zweiten Ladungssensor (54b) haben, die in jedem der Kohlezuführrohre (43) angeordnet sind, sodass sie entlang einer axialen Richtung des Kohlezuführrohrs in einem vorbestimmten Abstand voneinander sind, und
eine Bewegung elektrostatischer Ladungen, die aus dem Durchfluss von Kohlenstaub in dem Kohlezuführrohr resultieren, von den beiden Ladungssensoren (54a, 54b) gemessen wird, sodass die Zuführmenge von Kohlenstaub auf Basis der Bewegung elektrostatischer Ladungen gemessen wird, die von den beiden Ladungssensoren gemessen wird.

11. Mit Kohlenstaub befeuerter Dampferzeuger gemäß Anspruch 10, **dadurch gekennzeichnet, dass** der erste Ladungssensor (54a) und der zweite Ladungssensor (54b) kreisförmig sind und Fluidführungsmittel (88) auf einer stromaufwärts gelegenen Seite der Ladungssensoren (54a, b) zum Sammeln von Kohlenstaub und zum Schütten des gesammelten Kohlenstaubs in einen Mittelteil (92) des Kohlezuführrohrs vorgesehen sind, um dadurch die Menge an Kohlenstaub zu verringern, die durch eine Innenumfangsseite der Ladungssensoren gelangt.

12. Mit Kohlenstaub befeuerter Dampferzeuger gemäß Anspruch 1, ferner umfassend:
einen Zwischenüberhitzer, der ein erstes Zwischenüberhitzersystem (103) und ein zweites Zwischenüberhitzersystem (104) aufweist, die nebeneinander angeordnet sind;
wobei Dampf aus einer Hochdruckturbine von dem Zwischenüberhitzer erhitzt und an Mitteldruck- und Niederdruckturbinen geliefert wird, wobei der mit Kohlenstaub befeuerte Dampferzeuger ferner umfasst:
Zwischenüberhitzer-Dampf-Verteilungsmengen-Einstellmittel (111, 112), die die Mengen von Dampf einstellen, die an das erste und das zweite Zwischenüberhitzersystem verteilt werden;
Zwischenüberhitzer-Auslass-Dampf-Temperatur-Messmittel (113, 114), die Zwischenüberhitzer-Auslass-Dampf-Temperaturen des ersten und des zweiten Zwischenüberhitzersystems messen; und
Zwischenüberhitzer-Dampf-Verteilungsmengen-Steuermittel (120), die Steuerbefehlssignale an die Zwischenüberhitzer-Dampf-Verteilungsmengen-Einstellmittel senden, um die Temperaturdifferenz, die auf einer Abweichung zwischen den von den Zwischenüberhitzer-Auslass-Dampf-Temperatur-Messmitteln gemessenen Zwischenüberhitzer-Auslass-Dampf-Temperaturen basiert, zu eliminieren.

13. Mit Kohlenstaub befeuerter Dampferzeuger gemäß Anspruch 1, ferner umfassend:
einen Überhitzer, der ein erstes Überhitzersystem (204) und ein zweites Überhitzersystem (205) aufweist, die nebeneinander angeordnet sind;
wobei Dampf von dem Überhitzer überhitzt und an eine Hochdruckturbine geliefert wird;
wobei der mit Kohlenstaub befeuerte Dampferzeuger ferner umfasst:
Überhitzungs-Dampf-Verteilungsmengen-Einstellmittel (215, 216), die die Mengen von Dampf einstellen, die an das erste und das zweite Überhitzersystem geliefert werden;
Überhitzungs-Auslass-Dampf-Temperatur-Messmittel (217, 218), die Überhitzungs-Auslass-Dampf-Temperaturen des ersten und des zweiten Überhitzersystems messen; und
Überhitzungs-Dampf-Verteilungsmengen-Steuermittel (226), die Steuerbefehlssignale an die Überhitzungs-Dampf-Verteilungsmengen-Einstellmittel senden, um die Temperaturdifferenz, die auf einer Abweichung zwischen den von den Überhitzer-Auslass-Dampf-Temperatur-Messmitteln gemessenen Überhitzer-Auslass-Dampf-Temperaturen basiert, zu eliminieren.

## Revendications

1. Chaudière à charbon pulvérisé comprenant :
des moyens de broyage (3) qui génèrent du charbon pulvérisé en broyant du charbon fourni ;
des tuyaux de fourniture de charbon (43) qui sont agencés d'une manière telle qu'une pluralité de tuyaux de fourniture de charbon sont reliés à un moyen de broyage et à travers lesquels le charbon pulvérisé est transporté par écoulement d'air par de l'air primaire ;
des brûleurs de charbon pulvérisé (61) qui sont reliés aux côtés d'extrémité avant des tuyaux de fourniture de charbon respectivement et qui ont des buses de charbon pulvérisé (8) disposées de manière à faire face à un four ;
des moyens d'alimentation en air de combustion (63) qui fournissent un air de combustion autre que l'air primaire aux brûleurs de charbon pulvérisé (61) individuellement ;
des moyens de mesure de quantité de fourniture d'air de combustion (67) qui mesurent les quantités de fourniture de l'air de combustion fournies par les moyens d'alimentation en air de combustion individuellement ;
des moyens d'ajustement de quantité de fourniture d'air de combustion (64) qui ajustent les quantités de fourniture de l'air de combustion ; et
des moyens d'établissement de rapport d'air de brûleur (72) qui établissent des rapports d'air de brûleur ;
dans laquelle le charbon pulvérisé broyé et généré par les moyens de broyage (3) est distribué aux tuyaux de fourniture de charbon (43), projeté à partir des buses de charbon pulvérisé (8) dans le four et brûlé sous la fourniture de l'air de combustion ;
la chaudière à charbon pulvérisé comprenant en outre :
des moyens de mesure de quantité de fourniture de charbon pulvérisé (51) qui mesurent individuellement les quantités de fourniture de charbon pulvérisé transportées à travers les tuyaux de fourniture de charbon respectivement ; et
comprenant en outre des moyens de commande de quantité de fourniture d'air (66), **caractérisée en ce que** les moyens de commande de quantité de fourniture d'air (66), sur la base des quantités de fourniture de charbon pulvérisé mesurées par les moyens de mesure de quantité de fourniture de charbon pulvérisé (51), détectent un écart entre le débit du charbon pulvérisé transporté par chaque tuyau de fourniture de charbon (43) et un débit moyen de charbon pulvérisé transporté par tous les tuyaux de fourniture de charbon (43) ; calculent la quantité d'air de combustion fourni correspondant à la quantité de charbon pulvérisé sur la base de l'écart individuellement pour chaque brûleur de charbon pulvérisé (61) de sorte que le rapport d'air établi par les moyens d'établissement de rapport d'air de brûleur (72) puisse être maintenu ; et transmettent un signal de commande à chacun des moyens d'ajustement de quantité de fourniture d'air de combustion (64) pour, de ce fait, ajuster la quantité d'air de combustion fournie à chaque brûleur de charbon pulvérisé (61) individuellement.

2. Chaudière à charbon pulvérisé selon la revendication 1, **caractérisée en ce que** les moyens de mesure de quantité de fourniture de charbon pulvérisé (51) sont attachés aux tuyaux de fourniture de charbon (43) des brûleurs de charbon pulvérisé (61) ou à des groupes de brûleurs de charbon pulvérisé ayant un grand effet de réduction des composants non brûlés parmi les brûleurs de charbon pulvérisé de sorte que les quantités de fourniture d'air de combustion soient ajustées individuellement.

3. Chaudière à charbon pulvérisé selon la revendication 1, **caractérisée en ce que** les brûleurs de charbon pulvérisé (61) sont disposés en tant que plusieurs étages pour le four et les moyens de mesure de quantité de fourniture de charbon pulvérisé (51) sont attachés aux tuyaux de fourniture de charbon (43) des brûleurs de charbon pulvérisé, à l'exception des brûleurs de charbon pulvérisé disposés sur l'étage inférieur de sorte que les quantités de fourniture d'air de combustion soient ajustées individuellement.

4. Chaudière à charbon pulvérisé selon la revendication 1, **caractérisée en ce que** les brûleurs de charbon pulvérisé (61) sont disposés en tant que plusieurs étages pour le four et les moyens de mesure de quantité de fourniture de charbon pulvérisé (51) sont attachés aux tuyaux de fourniture de charbon (43) des brûleurs de charbon pulvérisé disposés au moins sur l'étage le plus haut de sorte que les quantités de fourniture d'air de combustion soient ajustées individuellement.

5. Chaudière à charbon pulvérisé selon la revendication 1, **caractérisée en ce qu'**une pluralité des brûleurs de charbon pulvérisé (61) sont disposés côte à côte pour former un étage de brûleurs, une pluralité d'orifices après air (65) sontdisposés côte à côte d'un côté aval de l'étage de brûleurs dans une direction d'écoulement de gaz d'échappement,
la quantité d'air de combustion fournie à au moins l'un des brûleurs de charbon pulvérisé (61) est ajustée, et
la quantité d'air de combustion fournie à un orifice après air (65) proche de la flamme formée par le brûleur de charbon pulvérisé est ajustée.

6. Chaudière à charbon pulvérisé selon la revendication 5, **caractérisée en ce que** la pluralité de brûleurs de charbon pulvérisé (61) et la pluralité d'orifices après air (65) sont disposés de manière à être séparés en un avant de cuve et un arrière de cuve d'un four,
lorsque la quantité d'air de combustion fournie aux brûleurs de charbon pulvérisé (61) disposés dans l'avant de cuve est ajustée, la quantité d'air de combustion fournie aux orifices après air disposés dans l'arrière de cuve est ajustée, et
lorsque la quantité d'air de combustion fournie aux brûleurs de charbon pulvérisé (61) disposés dans l'arrière de cuve est ajustée, la quantité d'air de combustion fournie aux orifices après air (65) disposés dans l'avant de cuve est ajustée.

7. Chaudière à charbon pulvérisé selon la revendication 1, **caractérisée en ce qu'**une pluralité d'orifices après air (65) sont disposés de manière dispersée d'un côté aval des brûleurs de charbon pulvérisé (61) dans une direction d'écoulement de gaz d'échappement, des moyens de détection de distribution de concentration (80, 81) pour détecter une distribution des concentrations d'oxygène ou des concentrations de CO dans le gaz d'échappement sont prévus dans un conduit de fumée (82) d'un côté aval des orifices après air (65) dans une direction d'écoulement de gaz d'échappement, et
alors que la quantité d'air de combustion fournie aux brûleurs de charbon pulvérisé (61) est ajustée, la quantité d'air de combustion fournie aux orifices après air (65) correspondant à une région de faible concentration d'oxygène ou de forte concentration de CO détectée par les moyens de détection de distribution de concentration (80, 81) est augmentée.

8. Chaudière à charbon pulvérisé selon la revendication 1, **caractérisée en ce que** chacun des moyens de mesure de quantité de fourniture de charbon pulvérisé (51) comporte un tuyau de résonance hyperfréquence (43) à travers lequel un fluide mélangé du charbon pulvérisé et de l'air primaire circule, et un émetteur hyperfréquence (52) et un récepteur hyperfréquence (53) qui sont disposés dans le tuyau de résonance hyperfréquence de manière à être à une distance prédéterminée l'un de l'autre le long d'une direction d'un écoulement du fluide mélangé, et
l'émetteur hyperfréquence (52) transmet des signaux hyperfréquences au récepteur hyperfréquence (53) pour mesurer une fréquence de résonance du tuyau de résonance hyperfréquence pour, de ce fait, mesurer la quantité de fourniture du charbon pulvérisé sur la base de la fréquence de résonance.

9. Chaudière à charbon pulvérisé selon la revendication 8, **caractérisée en ce que** l'émetteur hyperfréquence (52) et le récepteur hyperfréquence (53) font saillie dans le tuyau de résonance hyperfréquence (43), et un élément de cognement est disposé d'un côté amont de l'émetteur hyperfréquence dans le tuyau de résonance hyperfréquence pour démêler un écoulement du charbon pulvérisé condensé similaire une chaîne dans le tuyau de résonance hyperfréquence.

10. Chaudière à charbon pulvérisé selon la revendication 1, **caractérisée en ce que** les moyens de mesure de quantité de fourniture de charbon pulvérisé (51) comportent un premier capteur de charge (54a) et un deuxième capteur de charge (54b) qui sont disposés dans chacun des tuyaux de fourniture de charbon (43) de manière à être à une distance prédéterminée l'un de l'autre le long d'une direction axiale du tuyau de fourniture de charbon, et
le mouvement des charges électrostatiques résultant du passage de charbon pulvérisé dans le tuyau de fourniture de charbon est mesuré par les deux capteurs de charge (54a, 54b) de sorte que la quantité de fourniture de charbon pulvérisé soit mesurée sur la base du mouvement des charges électrostatiques mesuré par les deux capteurs de charge.

11. Chaudière à charbon pulvérisé selon la revendication 10, **caractérisée en ce que** le premier capteur de charge (54a) et le deuxième capteur de charge (54b) sont circulaires et des moyens de guidage de fluide (88) sont prévus d'un côté amont des capteurs de charge (54a, b) pour collecter le charbon pulvérisé et déverser le charbon pulvérisé collecté d'un côté de partie centrale (92) du tuyau de fourniture de charbon pour, de ce fait, réduire la quantité de charbon pulvérisé passant à travers un côté circonférentiel intérieur des capteurs de charge.

12. Chaudière à charbon pulvérisé selon la revendication 1, comprenant en outre :
un réchauffeur qui comporte un premier système de réchauffeur (103) et un deuxième système de réchauffeur (104) disposés côte à côte ;
dans laquelle la vapeur provenant d'une turbine haute pression est chauffée par le réchauffeur et fournie à des turbines basse pression et moyenne pression, la chaudière à charbon pulvérisé comprenant en outre :
des moyens d'ajustement de quantité de distribution de vapeur de réchauffage (111, 112) qui ajustent les quantités de vapeur distribuées aux premier et deuxième systèmes de réchauffeur ;
des moyens de mesure de température de vapeur de sortie de réchauffeur (113, 114) qui mesurent les températures de vapeur de sortie de réchauffeur des premier et deuxième systèmes de réchauffeur ; et
des moyens de commande de quantité de distribution de vapeur de réchauffage (120) qui envoient des signaux de commande de contrôle aux moyens d'ajustement de quantité de distribution de vapeur de réchauffage pour éliminer la différence de température sur la base d'un écart entre les températures de vapeur de sortie de réchauffeur mesurées par les moyens de mesure de température de vapeur de sortie de réchauffeur.

13. Chaudière à charbon pulvérisé selon la revendication 1, comprenant en outre :
un surchauffeur qui comporte un premier système de surchauffeur (204) et un deuxième système de surchauffeur (205) disposés côte à côte ;
dans laquelle la vapeur est surchauffée par le surchauffeur et fournie à une turbine haute pression ;
la chaudière à charbon pulvérisé comprenant en outre :
des moyens d'ajustement de quantité de distribution de vapeur de surchauffage (215, 216) qui ajustent les quantités de vapeur distribuées aux premier et deuxième systèmes de surchauffeur ;
des moyens de mesure de température de vapeur de sortie de surchauffeur (217, 218) qui mesurent les températures de vapeur de sortie de surchauffeur des premier et deuxième systèmes de surchauffeur ; et
des moyens de commande de quantité de distribution de vapeur de surchauffage (226) qui envoient des signaux de commande de contrôle aux moyens d'ajustement de quantité de distribution de vapeur de surchauffage pour éliminer la différence de température sur la base d'un écart entre les températures de vapeur de sortie de surchauffeur mesurées par les moyens de mesure de température de vapeur de sortie de surchauffeur.
